(19) Europäisches Patentamt
European Patent Office
Office européen des brevets

(11) **EP 3 617 755 B1**

(12) **EUROPEAN PATENT SPECIFICATION**

(45) Date of publication and mention
of the grant of the patent:
**14.04.2021  Bulletin 2021/15**

(21) Application number: **18791436.1**

(22) Date of filing: **13.02.2018**

(51) Int Cl.:
*G02B 5/02* *(2006.01)*          *F21S 2/00* *(2016.01)*
*F21V 5/00* *(2018.01)*          *F21V 5/02* *(2006.01)*
*G02F 1/1335* *(2006.01)*          *F21Y 115/10* *(2016.01)*

(86) International application number:
**PCT/JP2018/004796**

(87) International publication number:
**WO 2018/198483 (01.11.2018 Gazette 2018/44)**

(54) **DISPLAY DEVICE**

ANZEIGEVORRICTHUNG

DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.04.2017  JP 2017088598**

(43) Date of publication of application:
**04.03.2020  Bulletin 2020/10**

(73) Proprietor: **Sony Corporation
Tokyo 108-0075 (JP)**

(72) Inventors:
• **FURUKAWA, Norimasa
  Tokyo 141-8610 (JP)**
• **NAKAKI, Kenichi
  Tokyo 141-8610 (JP)**

(74) Representative: **2SPL Patentanwälte PartG mbB
Postfach 15 17 23
80050 München (DE)**

(56) References cited:
**JP-A- 2006 032 172          JP-A- 2007 114 587
US-A1- 2005 254 259**

## Description

Technical Field

The present disclosure relates to an optical member that adjusts light distribution of entering light, and to a display and an illuminator each provided with the optical member.

Background Art

Various techniques have been proposed for an optical member that, upon allowing entering light to pass therethrough, adjusts a light distribution characteristic of the passing light (see, for example, NPTL 1).
Further, Patent Document 1 propose a light source device, comprising a light guide having two light incident surfaces opposed to each other for receiving incident light radiated from a primary light source and a light outgoing surface for emitting the incident light and a light deflection element disposed adjacent to the light emitting surface side of the light guide.

Citation List

Non-patent Literature

NPTL 1: LIGHT SHAPING DIFFUSER OVERVIEW, [searched on April 21, 2017], Internet URL:http://www.luminitco.com/products/light-shaping-diffusers

PATENT DOCUMENT

PATENT DOCUMENT 1: US 2005/254259 A1

Summary of the Invention

Incidentally, in such an optical member, it is desired to achieve a desired light distribution characteristic with a simple configuration.
Accordingly, it is desirable to provide an optical member that achieves a desired light distribution characteristic with a simple configuration, a display provided with the optical member, and an illuminator provided with the optical member.
A display unit comprising a first optical member according to one embodiment of the present disclosure extends along a first plane and has a thickness in a first direction perpendicular to the first plane, and a light-emitting device. The first optical member includes n-number of inclined surfaces. The n-number of inclined surfaces include first to n-th inclined surfaces. The first to n-th inclined surfaces are positioned in respective regions other than regions overlapping each other in the first direction. The first to n-th inclined surfaces are each inclined at an angle $A_m$ with respect to the first plane and allow entering light to pass therethrough. The angle $A_m$ is smaller than 90 degrees. The following conditional expression (1) and the following conditional expression (2) are satisfied,

$$WA \geq A_m - A_{m-1} \qquad \ldots\ldots (1)$$

$$A_n > A_{n-1} \cdots > A_m > A_{m-1} > \cdots A_2 > A_1 \quad \ldots\ldots (2)$$

where "WA" is an angle corresponding to a value equal to or smaller than a half-width of a light distribution of the entering light, "$A_m$" is an angle of an m-th inclined surface with respect to the first plane, "$A_{m-1}$" is an angle of an (m-1)-th inclined surface with respect to the first plane, "n" is a natural number that is equal to or greater than 2, and "m" is any natural number that is equal to or smaller than "n". All of the n-number of inclined surfaces are contiguous and the n-number of inclined surfaces comprise respective side surfaces of n-number of cones, the n-number of cones each having a height in the first direction.
Moreover, a display according to one embodiment of the present disclosure includes an image display section that outputs image light, and an optical member. The optical member extends along a first plane and has a thickness in a first direction perpendicular to the first plane. The optical member allows the image light from the image display section to pass therethrough. Moreover, an illuminator according to one embodiment of the present disclosure includes a light source that outputs illumination light, and an optical member. The optical member extends along a first plane and has a thickness in a first direction perpendicular to the first plane. The optical member allows the illumination light from the light source to pass therethrough. Here, the optical member in the above-described display and the above-described illuminator is substantially the same as the first optical member according to one embodiment of the present disclosure described above.

A second optical member according to one embodiment of the present disclosure extends along a first plane and has a thickness in a first direction perpendicular to the first plane. The second optical member includes two or more inclined surfaces. The two or more inclined surfaces are positioned in respective regions other than regions overlapping each other in the first direction. The two or more inclined surfaces are inclined at respective angles, with respect to the first plane, that are discretely different from each other and are smaller than 90 degrees. The two or more inclined surfaces allow entering light to pass therethrough. Here, a first angle, with respect to the first plane, of a first inclined surface of the two or more inclined surfaces is closest to a second angle, with respect to the first plane, of a second inclined surface of the two or more inclined surfaces. A difference between the first angle and the second angle is equal to or smaller than an angle corresponding to a value of a half-width of a light distribution of the entering light.

The optical member, the display, and the illuminator according to one embodiment of the present disclosure each include the inclined surfaces having respective angles, with respect to the first plane, that are discretely different from each other within a range smaller than 90 degrees. Accordingly, it is possible to easily achieve a desired light distribution characteristic.

According to the optical member of one embodiment of the present disclosure, it is possible to achieve a desired light distribution characteristic with a simple configuration. Therefore, according to the display provided with the optical member, for example, it is possible to achieve a superior viewing angle characteristic. Moreover, according to the illuminator provided with the optical member, it is possible to adjust directivity of illumination light. For example, it is possible to make more moderate bias of the illumination light due to a light distribution direction.

It is to be noted that effects of the present disclosure are not limited to the above, and may be any of the effects described below.

Brief Description of Drawings

[FIG. 1] FIG. 1 is a perspective view of an example of an overall configuration of a display unit provided with an optical member according to a first embodiment of the present disclosure.
[FIG. 2] FIG. 2 is an enlarged plan view of a portion of the optical member illustrated in FIG. 1.
[FIG. 3] FIG. 3 is a cross-sectional view of a configuration of a main part of a light-emitting member illustrated in FIG. 1.
[FIG. 4] FIG. 4 is a characteristic diagram illustrating a light-ray intensity distribution characteristic of a perfect diffusion surface, and illustrating a relationship between an exit angle and a luminous flux density.
[FIG. 5] FIG. 5 is a cross-sectional view of a configuration of a first modification example of the optical member illustrated in FIG. 1.
[FIG. 6] FIG. 6 is a plan view of the configuration of the first modification example of the optical member illustrated in FIG. 1.
[FIG. 7] FIG. 7 is a schematic diagram illustrating a state of a light distribution in the first modification example of the optical member illustrated in FIG. 1.
[FIG. 8] FIG. 8 is a cross-sectional view of a configuration of a second modification example of the optical member illustrated in FIG. 1.
[FIG. 9] FIG. 9 is a schematic diagram illustrating a state of a light distribution in the second modification example of the optical member illustrated in FIG. 1.
[FIG. 10] FIG. 10 is a perspective view of a configuration of a third modification example of the optical member illustrated in FIG. 1.
[FIG. 11] FIG. 11 is a perspective view of an appearance of a display according to a second embodiment of the present disclosure.
[FIG. 12] FIG. 12 is an exploded perspective view of a body illustrated in FIG. 11.
[FIG. 13] FIG. 13 is an exploded perspective view of a panel module illustrated in FIG. 12.
[FIG. 14A] FIG. 14A is a perspective view of an appearance of a tablet-type terminal device on which the display of the present disclosure is mounted.
[FIG. 14B] FIG. 14B is a perspective view of an appearance of another tablet-type terminal device on which the display of the present disclosure is mounted.
[FIG. 15] FIG. 15 is a perspective view of an appearance of a first illuminator provided with a light-emitting unit of the present disclosure.

[FIG. 16] FIG. 16 is a perspective view of an appearance of a second illuminator provided with the light-emitting unit of the present disclosure.

[FIG. 17] FIG. 17 is a perspective view of an appearance of the light-emitting unit of the present disclosure.

[FIG. 18] FIG. 18 is a perspective view of an appearance of a third illuminator provided with the light-emitting unit device of the present disclosure.

[FIG. 19A] FIG. 19A is a plan view of a planar shape of an optical sheet according to a fourth modification example of the present disclosure.

[FIG. 19B] FIG. 19B is a cross-sectional view of a cross-sectional shape of the optical sheet according to the fourth modification example of the present disclosure.

Modes for Carrying Out the Invention

Some embodiments of the present disclosure are described below in detail with reference to the drawings. It is to be noted that the description is given in the following order.

1. First Embodiment
An example of a display unit provided with an optical member having two or more conical depressions including respective inclined surfaces having different angles.
2. Modification Examples
3. Second Embodiment (Display; Liquid Crystal Display)
4. Application Examples of Display
5. Application Examples of Illuminator
6. Other Modification Examples

[1.First Embodiment]

[1.1 Configuration of Display]

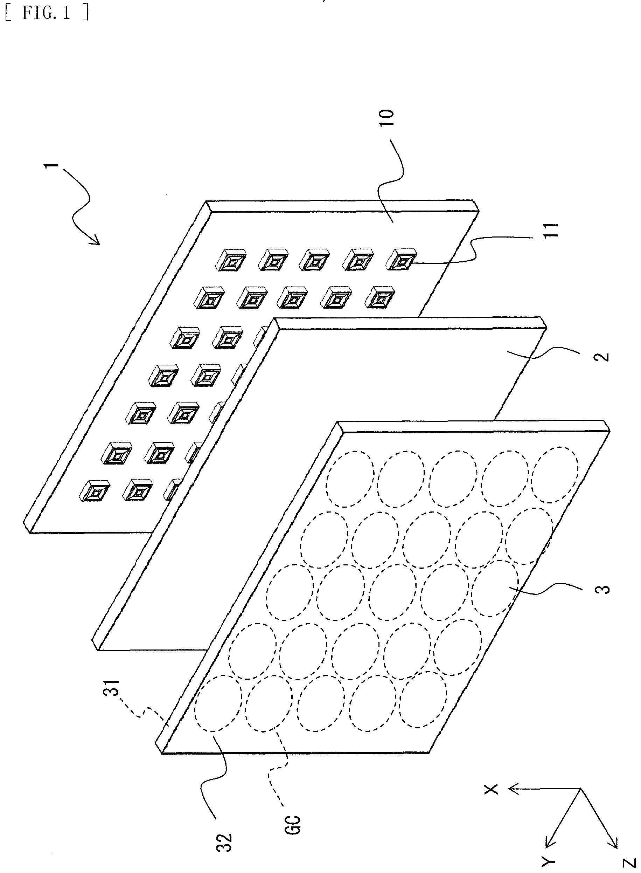

FIG. 1 is a perspective view of an example of an overall configuration of a display unit according to a first embodiment of the present disclosure. The display unit is to be mounted on, for example, a thin television apparatus. The display unit includes, for example, a light-emitting device 1, a transmissive liquid crystal display panel 2, and an optical sheet 3 that are so arranged in order as to overlap each other. The optical sheet 3 is one specific example corresponding to an "optical member" of the present disclosure.

In the present specification, a direction in which the light-emitting device 1, the liquid crystal display panel 2, and the optical sheet 3 are arranged is defined as a Z-axis direction (a front-rear direction or a thickness direction), and a top-bottom direction in each of main surfaces (largest surfaces) of the light-emitting device 1, the liquid crystal display panel 2, and the optical sheet 3 is defined as an X-direction. A left-right direction in each of the main surfaces (largest surfaces) of the light-emitting device 1, the liquid crystal display panel 2, and the optical sheet 3 is defined as a Y-direction.

The light-emitting device 1 serves, for example, as a back light that illuminates a transmissive liquid crystal panel from behind. The light-emitting device 1 is provided with two or more light-emitting sections 11 arranged in a matrix on a substrate 10, for example. It is to be noted that FIG. 1 illustrates an example in which the two or more light-emitting sections 11 are arranged along both the X-axis direction and the Y-axis direction perpendicular to each other; however, the present disclosure is not limited thereto. The light-emitting section 11 is a point light source. Specifically, the light-emitting section 11 includes an LED (Light-emitting Diode). The light-emitting section 11 has an optical axis coincident with the Z-axis direction, for example.

In this display, light from the light-emitting device 1 is selectively allowed to pass through the liquid crystal display panel 2, by which image display is performed. Further, by allowing image light from the liquid crystal display panel 2 to pass through the optical sheet 3, it is possible to achieve a desired viewing angle characteristic. For example, light distribution is performed in accordance with Lambert's law.

[1.2 Configuration of Optical Sheet]

The optical sheet 3 extends along a first plane (XY plane) and has a thickness in a first direction (Z-axis direction) perpendicular to the XY plane. The optical sheet 3 includes a transparent material such as glass or thermoplastic resin having a relatively-high refractive index, for example. The optical sheet 3 has two or more inclined surfaces S (n-number of inclined surfaces S, i.e., first inclined surface S1 to an n-th inclined surface Sn). The inclined surfaces S are inclined, with respect to the XY plane, at respective angles that are discretely different from each other and are smaller than 90 degrees. The inclined surfaces S each allow entering light (here, the image light from the liquid crystal display panel 2) to pass therethrough. The two or more inclined surfaces S are positioned in respective regions other than regions overlapping each other in the Z-axis direction. That is, the image light from the liquid crystal display panel 2 is allowed to enter all of the two or more inclined surfaces S.

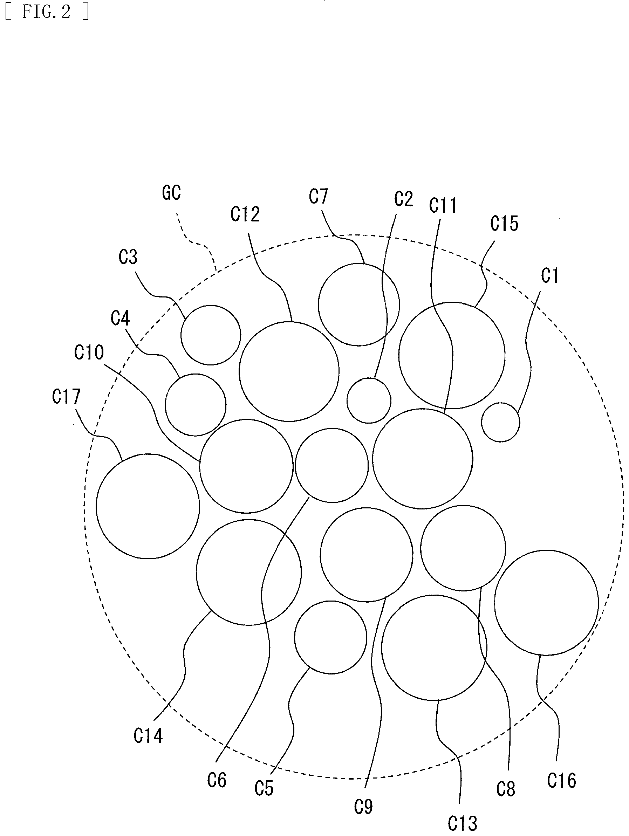

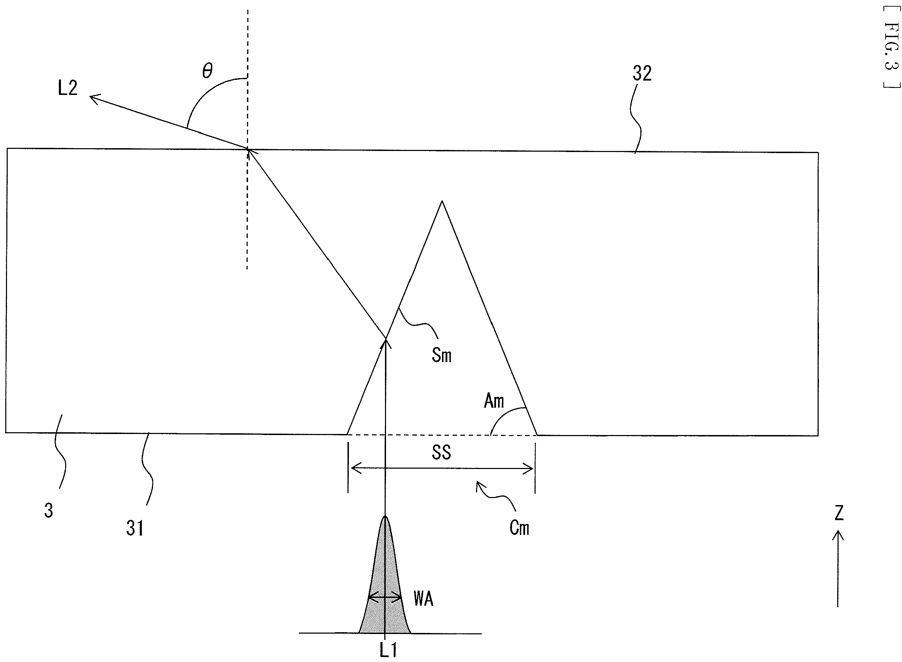

FIG. 2 illustrates, in an enlarged manner, a portion of a planar configuration of the optical sheet 3 viewed from entering surface 31 side. FIG. 3 illustrates, in an enlarged manner, a portion of a cross-section of the optical sheet 3 along the Z-axis direction.

FIG. 2 illustrates an example case where the n-number of inclined surfaces S (S1 to Sn) are respective side surfaces of n-number of cones C (C1 to Cn) each having a height in the Z-axis direction. FIG. 2 illustrates an example case where "n" is 17 in particular. The seventeen cones C1 to C17 illustrated in FIG. 2 are disposed at respective positions not overlapping each other in the XY plane, and configure a single cone group GC. In the optical sheet 3, two or more cone groups GC are periodically arranged in the XY plane.

The optical sheet 3 satisfies the following conditional expressions (1) and (2).

$$WA \geq A_m - A_{m-1} \qquad \ldots \ldots (1)$$

$$A_n > A_{n-1} \cdots > A_m > A_{m-1} > \cdots A_2 > A_1 \quad \ldots \ldots (2)$$

It is to be noted that "WA" is an angle corresponding to a value equal to or smaller than a half-width of a light distribution of the entering light (the image light from the liquid crystal display panel 2). For example, "WA" is equal to or smaller than 30°. "$A_m$" is an angle of an m-th inclined surface S with respect to the XY plane and corresponds to a light-ray exit angle $\theta$ (FIG. 3). "$A_{m-1}$" is an angle of an (m-1)-th inclined surface $S_{m-1}$ with respect to the XY plane. "n" is an integer equal to or greater than 2. "m" is any natural number equal to or smaller than "n."

In the example in FIG. 2, the angle WA is 20°, and the inclined surfaces S1 to S17 of the cones C1 to C17 have refractive angles A1 to A17 which should provide light-ray exit angles θ1 to θ17 of 5°, 10°, 15°, 20°, 25°, 30°, 35°, 40°, 45°, 50°, 55°, 60°, 65°, 70°, 75°, 80°, and 85° with respect to the XY plane, respectively. Since the refractive angle of the optical sheet 3 differs depending on a refractive index N of a material included in the optical sheet 3. Specifically, the refractive angle of the optical sheet 3 has the following relationship.

$$\theta m = \arcsin(\sin((90-A_m) - \arcsin(\sin((90-A_m)/N2))*N2) \ldots\ldots(3)$$

As described above, in the optical sheet 3, for example, an angle θ1 and an angle θ2 are so set that a difference between the angle θ1 and the angle θ2 is 5°. The angle θ1 is an angle, with respect to the XY plane, of a light ray exiting from the inclined surface S1. The angle θ2 is an angle, with respect to the XY plane, of a light ray exiting from the inclined surface S2. The angle θ2 is an angle closest to the angle θ1. That is, the difference between the angle θ1 and the angle θ2 is equal to or smaller than the angle WA corresponding to the value of the half-width of the light distribution of the image light from the liquid crystal display panel 2, which is the entering light. Moreover, a difference between a light-ray exit angle $\theta_m$ corresponding to the angle $A_m$ and a light-ray exit angle $\theta_{m-1}$ corresponding to the angle $A_{m-1}$ is 5° and is substantially constant.

Further, an area SS corresponding to a bottom surface of each of the cones C1 to C17 depends on corresponding one of the angles θ (θ1 to θ17) of exiting light passing through corresponding one of the inclined surfaces S1 to S17 and exiting from the exit surface 32 of the optical sheet 3. That is, it is preferable that an area of a projection of the m-th inclined surface Sm onto the XY plane be proportional to a product of a mathematical function $\sin\theta_m$ and a mathematical function $f(\theta_m)$, where $\theta_m$ is the exit angle of the exiting light passing through the m-th inclined surface $S_m$ and exiting from the exit surface 32. Here, it is preferable that the function $f(\theta_m)$ be $\sin2\theta_m$ or $\cos\theta_m$. Therefore, the area of the projection of the inclined surface Sm onto the XY plane decreases as the angle $A_m$ increases.

As described above, according to the optical sheet 3, the image light having the half-width of the angle WA[°] is refracted, for example, by the inclined surface S1 having an angle of 5° into light having a light-ray angle within a range of 5° to WA+5° and the refracted light is outputted from the inclined surface S1. Further, according to the optical sheet 3, the image light having the half-width of the angle WA[°] is refracted, for example, by the inclined surface S2 having an angle of 10° into light having a light-ray angle within a range of 10° to WA+10° and the refracted light is outputted from the inclined surface S2. Therefore, even if an entering angle of the image light from the liquid crystal display panel 2 is limited to a certain narrow angle range, it is possible to perform light distribution at a greater angle by distributing the light via the optical sheet 3.

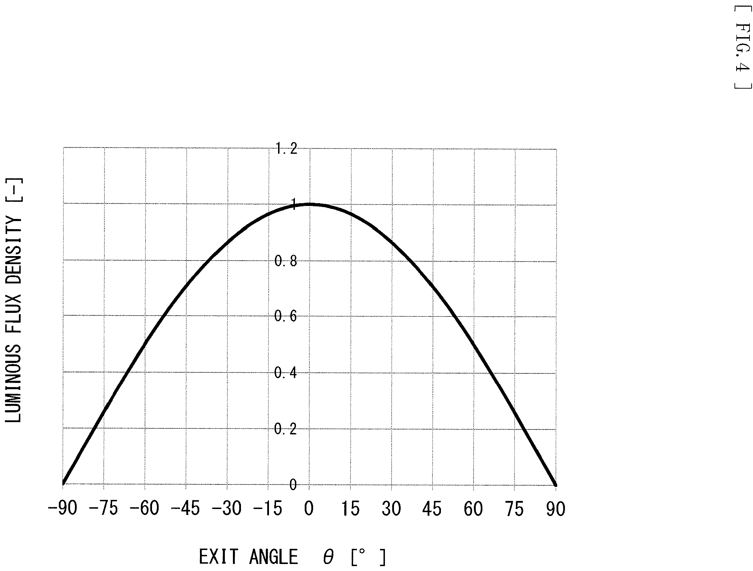

Typically, a light-ray intensity distribution characteristic of a perfect diffusion surface is understood to follow Lambert's law. FIG. 4 illustrates an example distribution. In FIG. 4, a horizontal axis represents the exit angle θ, and a vertical axis represents the luminous flux density (which is normalized by setting the maximum value to 1). According to this, if the luminous flux density with respect to the exit angle θ on the light-emitting surface (here, the exit surface 32 of the optical sheet 3) is in accordance with cosθ, the same luminance is obtainable when the exit surface 32 of the optical sheet 3 is viewed from any azimuth. In other words, there is no variation (no increase or no decrease) in luminance due to variation in viewing angle.

[1.3 Workings and Effects of Optical Sheet 3]

In the optical sheet 3, in order to achieve a light-ray intensity distribution characteristic closer to that of such a perfect diffusion surface, the cones Cm (C1 to C17) are provided. The cones Cm (C1 to C17) have respective inclined surfaces Sm (S1 to S17) that have respective angles Am (A1 to A17) discretely different from each other on the basis of the angle θ (5° in the example in FIG. 2) equal to or smaller than the angle WA as a unit angle. Accordingly, it is possible to disperse, at every unit angle θ (for example, 5°), image light L1 entering at a certain entering angle and output the dispersed light as exiting light L2. Therefore, according to the display provided with the optical sheet 3, it is possible to make more moderate the bias of the luminance due to the difference in the viewing angle, and to achieve viewing of an image having a luminance substantially-constant from any azimuth.

[2. Modification Examples]

(First Modification Example)

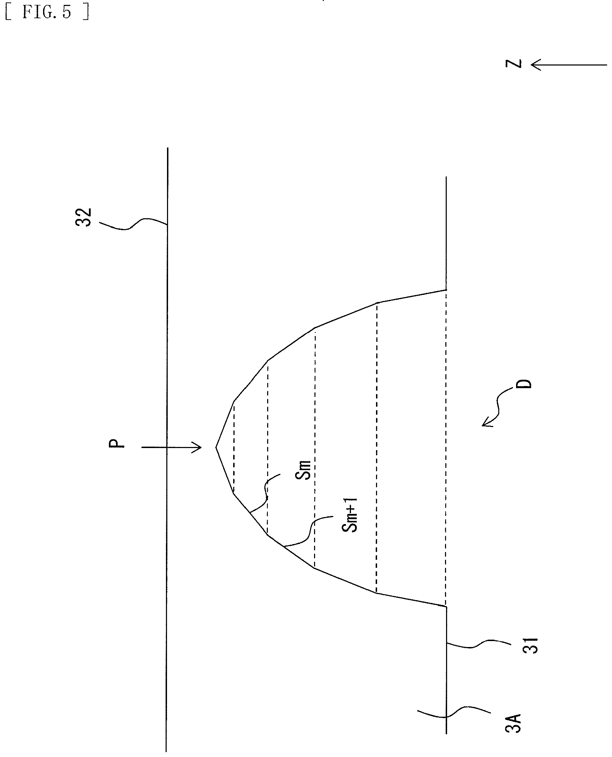

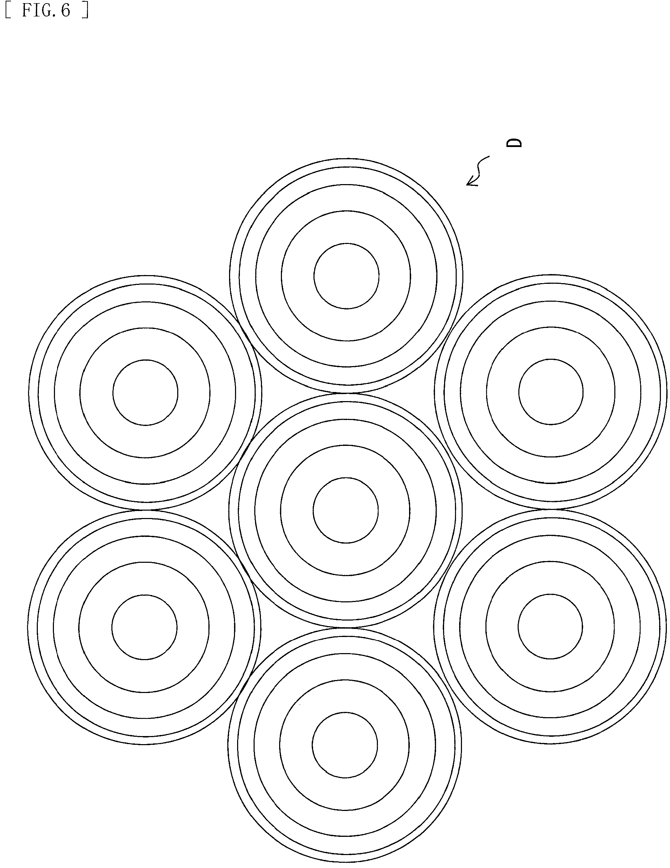

FIG. 5 is an enlarged cross-sectional view of a main part of the optical sheet 3A according to a first modification example of the present disclosure. In this optical sheet 3A, as illustrated in FIG. 6, two or more depressions D are periodically arranged along the XY plane. In the depression D, all of the n-number of inclined surfaces S (S1 to S5) are contiguous (n=5 in FIG. 5). More specifically, the first inclined surface S1, the second inclined surface S2, the third inclined surface S3, the fourth inclined surface S4, and the fifth inclined surface S5 are contiguous in this order. In this manner, the n-number of inclined surfaces S are contiguous with each other and thereby provide a single depression D directed to the entering side as a whole.

The n-number of inclined surfaces are respective side surfaces of n-number of truncated cones each having a height in the Z-axis direction. The center positions of the respective n-number of inclined surfaces S in the XY plane substantially coincide with each other at a position P.

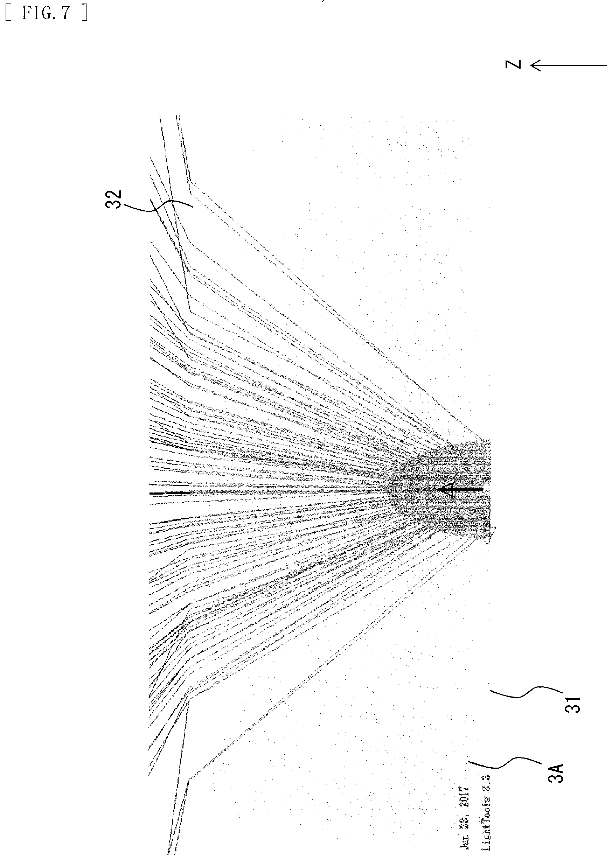

In the optical sheet 3A having such a configuration, effects similar to those of the optical sheet 3 are also expected. Specifically, for example, as illustrated in FIG. 7, it is possible to disperse image light entering at a certain entering angle and output the dispersed light from the exit surface 32. Therefore, in the display provided with the optical sheet 3A, it is also possible to make more moderate the bias of the luminance due to the difference in the viewing angle, and to achieve viewing of an image having a luminance substantially-constant from any azimuth.

(Second Modification Example)

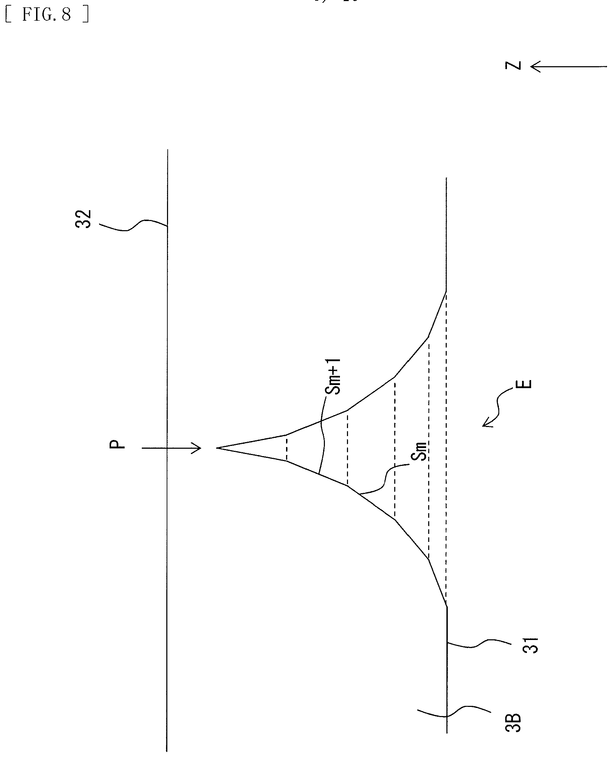

FIG. 8 is an enlarged cross-sectional view of a main part of an optical sheet 3B according to a second modification example of the present disclosure. In the optical sheet 3B, two or more depressions E are periodically arranged along the XY plane. In the depression E, all of the n-number of inclined surfaces S (S1 to S5) are contiguous (n=5 in FIG. 5). More specifically, the first inclined surface S1, the second inclined surface S2, the third inclined surface S3, the fourth inclined surface S4, and the fifth inclined surface S5 are contiguous in this order. In this manner, the n-number of inclined surfaces S are contiguous with each other and thereby provide a single depression E directed to the entering side as a whole.

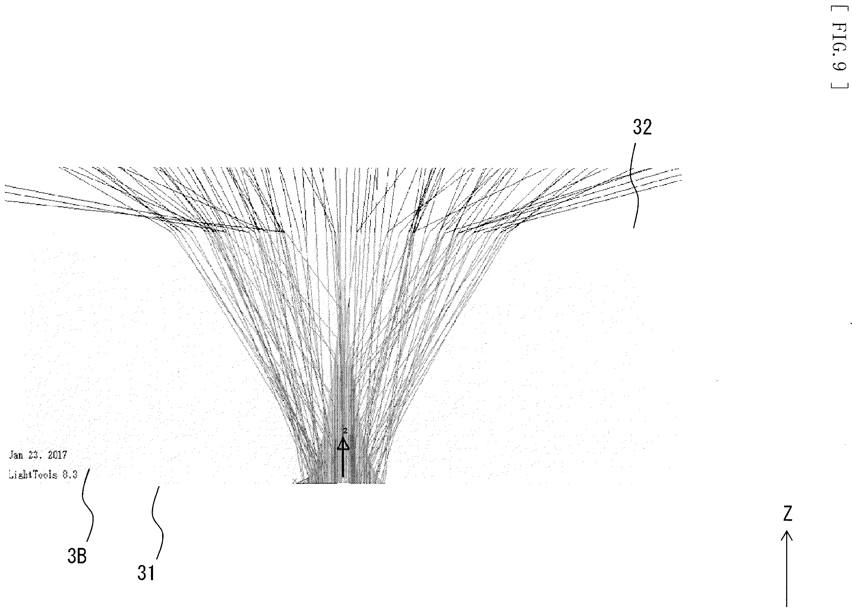

In the optical sheet 3B having such a configuration, effects similar to those of the optical sheet 3 are also expected. Specifically, for example, as illustrated in FIG. 9, it is possible to disperse image light entering at a certain entering angle and output the dispersed light from the exit surface 32. Therefore, in the display provided with the optical sheet 3B, it is also possible to make more moderate the bias of the luminance due to the difference in the viewing angle, and to achieve viewing of an image having a luminance substantially-constant from any azimuth.

(Third Modification Example)

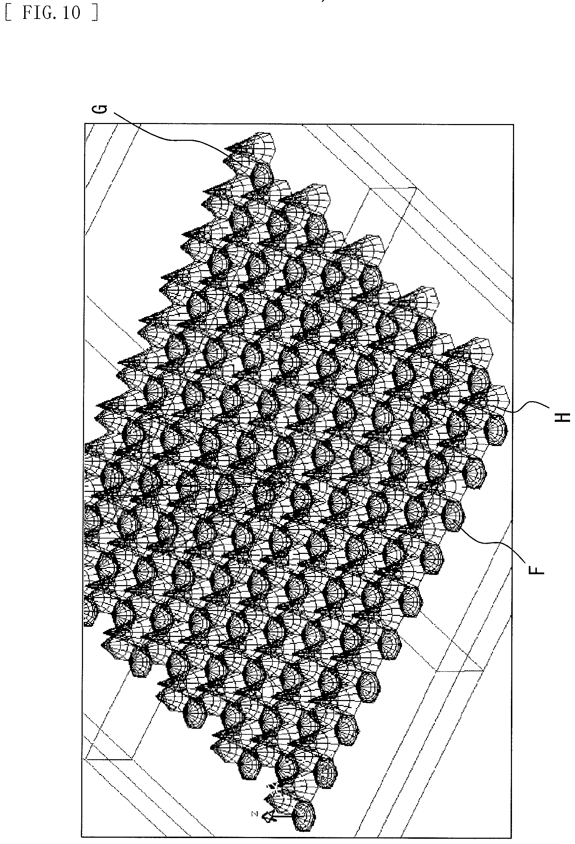

FIG. 10 is an enlarged perspective view of a main part of an optical sheet 3C according to a third modification example of the present disclosure. In the optical sheet 3C, n-number of inclined surfaces are so allocated that each of the n-number of inclined surfaces is included in any one of three types of depressions F, G, and H. The depressions F, G, and H are disposed close to each other.

[3.Second Embodiment]

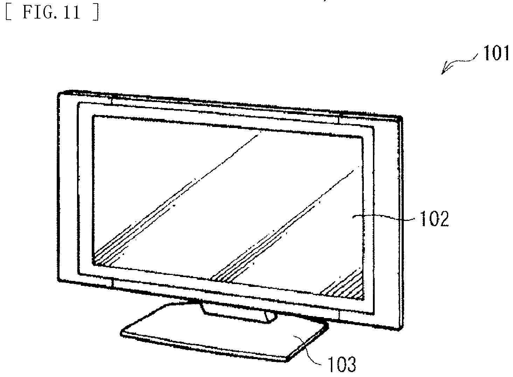

FIG. 11 illustrates an appearance of a display 101 according to a second embodiment of the present technology. The display 101 includes the display unit described above. The display 101 is used, for example, as a thin television device. The display 101 has a configuration in which a flat-plate-shaped body 102 directed to displaying an image is supported by a stand 103. It is to be noted that, although the display 101 is used as a stationary type by mounting the stand 103 on a horizontal surface such as a floor, a shelf, or a table in a state in which the stand 103 is attached to the body 102, the display 101 may be used as a wall-hanging type in a state in which the stand 103 is detached from the body 102.

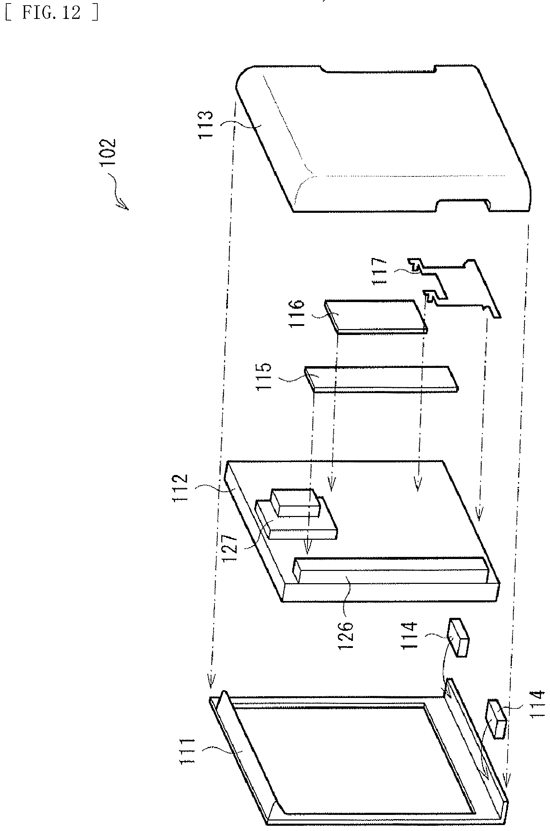

FIG. 12 illustrates, in an exploded manner, the body 102 illustrated in FIG. 10. The body 102 includes, for example, a front exterior member (bezel) 111, a panel module 112, and a rear exterior member (rear cover) 113 in this order from front side (viewer side). The front exterior member 111 is a frame-shaped member that covers a front peripheral edge of the panel module 112. A pair of speakers 114 are provided at the bottom of the front exterior member 111. The panel module 112 is fixed to the front exterior member 111. A power substrate 115 and a signal substrate 116 are mounted on a rear surface of the panel module 112, and a mounting bracket 117 is fixed to the rear surface of the panel module 112. The mounting bracket 117 is directed to attachment of a wall-hanging bracket, attachment of a substrate, etc., and attachment of the stand 103. The rear exterior member 113 covers the rear surface and a side surface of the panel module 112.

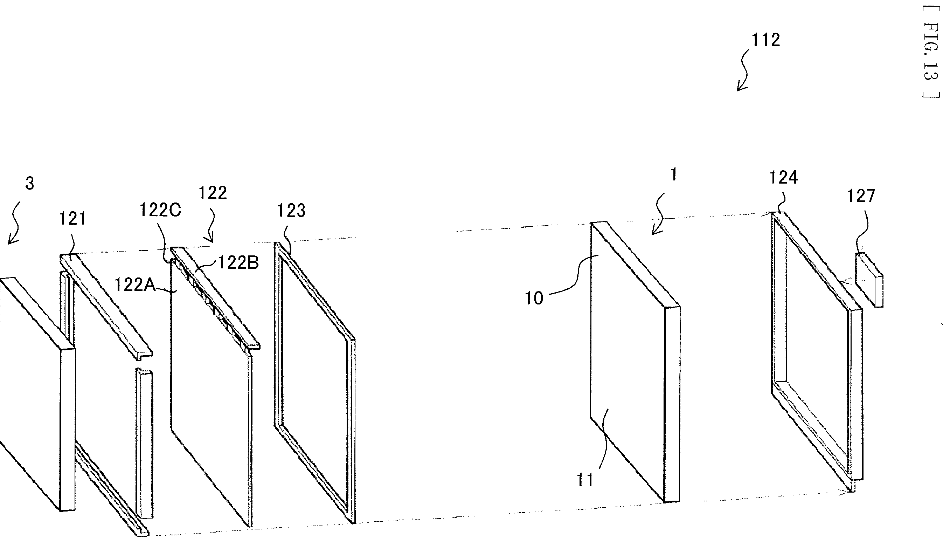

FIG. 13 illustrates, in an exploded manner, the panel module 112 illustrated in FIG. 12. The panel module 112 includes, for example, the optical sheet 50, a front housing (top chassis) 121, a liquid crystal panel 122, a frame-shaped member (middle chassis) 123, the light-emitting device 1 in which two or more light-emitting sections 11 are arranged on the substrate 10, a rear housing (back chassis) 124, and a timing controller substrate 127 in this order from the front side (viewer side).

The front housing 121 is a frame-shaped metal part that covers a front peripheral edge of the liquid crystal panel 122. The liquid crystal panel 122 includes, for example, a liquid crystal cell 122A, a source substrate 122B, and a flexible substrate 122C such as COF (Chip On Film) that couples these members. The frame-shaped member 123 is a frame-shaped resin part that holds the liquid crystal panel 122 and the optical sheet 50. The rear housing 124 is a metal part that includes iron (Fe), etc. and accommodates the liquid crystal panel 122, the frame-shaped member 123, and the light-emitting device 1. The timing-controller substrate 127 is also mounted on a rear surface of the rear housing 124.

In the display 101, light from the light-emitting device 1 is selectively allowed to pass through the liquid crystal panel 122, by which image display is performed. Here, as described in the first embodiment, the optical sheet 3 having a superior light distribution characteristic is disposed. As a result, a viewing angle characteristic of the display 101 improves.

[4. Application Examples of Display]

Examples of application of the display 101 described above to an electronic apparatus are described below. Examples of the electronic apparatus include a television apparatus, a digital camera, a laptop personal computer, a portable terminal apparatus such as a mobile phone, a video camera, etc. In other words, it is possible to apply the above-described display to an electronic apparatus of any field that displays, as an image or a video, an image signal inputted from outside or an image signal generated internally.

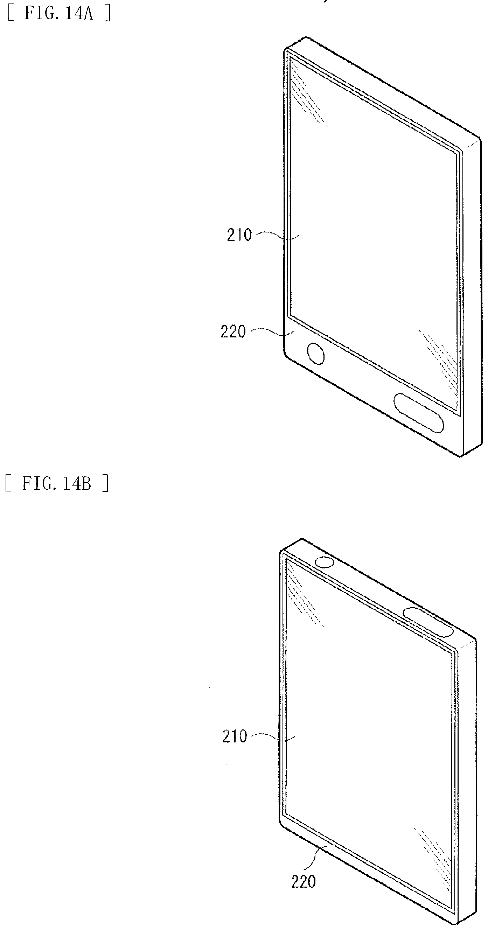

FIG. 14A illustrates an appearance of a tablet-type terminal apparatus to which the display 101 of the second embodiment described above is applied. FIG. 14B illustrates an appearance of another tablet-type terminal apparatus to which the display 101 is applied. Each of these tablet-type terminal apparatuses includes, for example, a display section 210 and a non-display section 220. The display section 210 includes the display 101 of the embodiment described above.

[5. Application Examples of Illuminator]

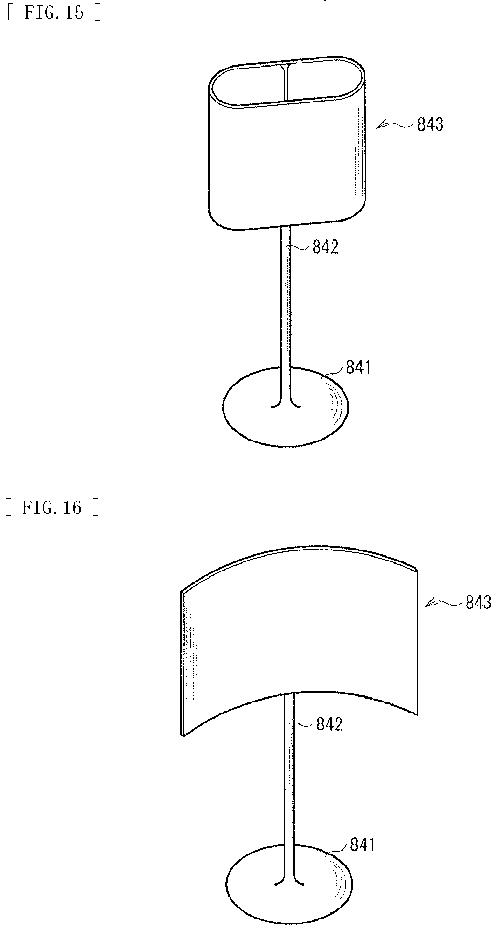

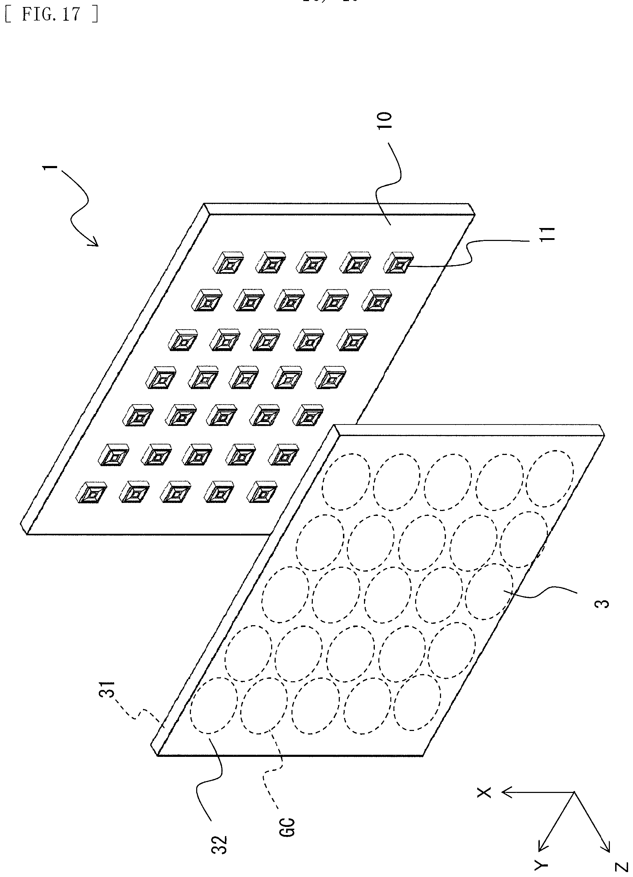

FIGs. 15 and 16 each illustrate an appearance of a tabletop illuminator having a light-emitting unit illustrated in FIG. 17. The light-emitting unit illustrated in FIG. 17 has a configuration same as that of the display unit of FIG. 1 except that the light-emitting unit does not include the liquid crystal display panel 2. In the illuminator, for example, an illuminating section 843 is attached to a support 842 provided on a base 841. The illuminating section 843 includes the light-emitting unit of FIG. 17. It is possible to provide, to the illuminating section 843, any shape such as a cylindrical shape illustrated in FIG. 15 or a curved surface shape illustrated in FIG. 16 by providing a curved shape to the light-emitting device 1, the optical sheet 3, etc.

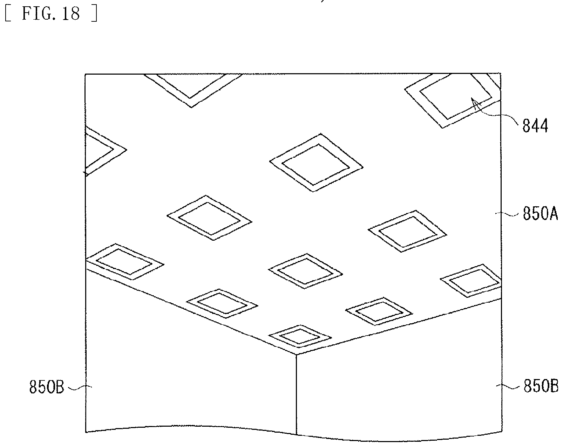

FIG. 18 illustrates an appearance of an indoor illuminator to which the light-emitting unit illustrated in FIG. 17, etc. are applied. The illuminator includes an illuminating section 844 including the light-emitting unit illustrated in FIG. 17, etc. Appropriate number of illuminating sections 844 are disposed at appropriate intervals on a ceiling 850A of a building. It is to be noted that installment of the illuminating section 844 is not limited to the ceiling 850A, and it is possible to install the illuminating section 844 in any place such as a wall 850B or a floor (unillustrated), depending on the application.

In these illuminators, illumination having a desired light distribution characteristic is performed owing to workings of the optical sheet 3 in the light-emitting unit. For example, it is possible to perform illumination with less bias in luminance by using the light distribution angle.

[6. Other Modification Examples]

Although the present disclosure has been described above with reference to the embodiments and the modification examples, the present disclosure is not limited to the above-described embodiments, etc., and is modifiable in various ways. For example, the shape of the depression, the angle of the inclined surface, the width of the inclined surface, etc. described in the above embodiments are non-limiting.

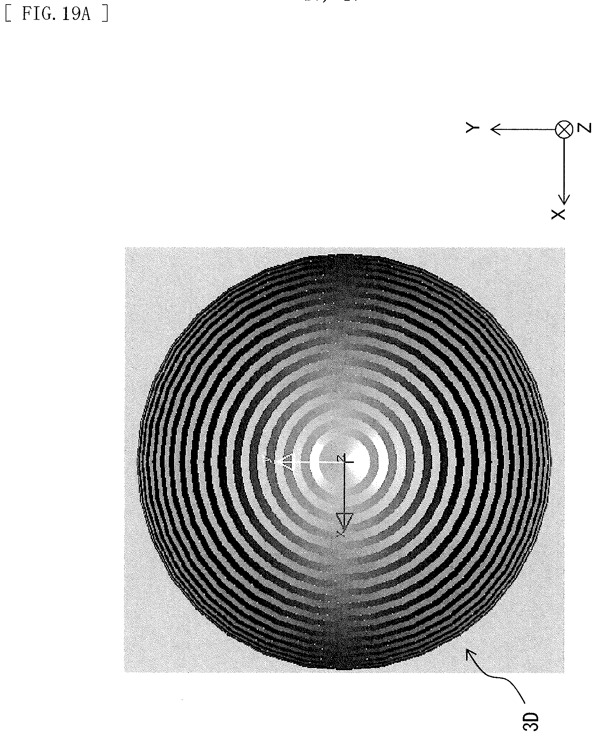

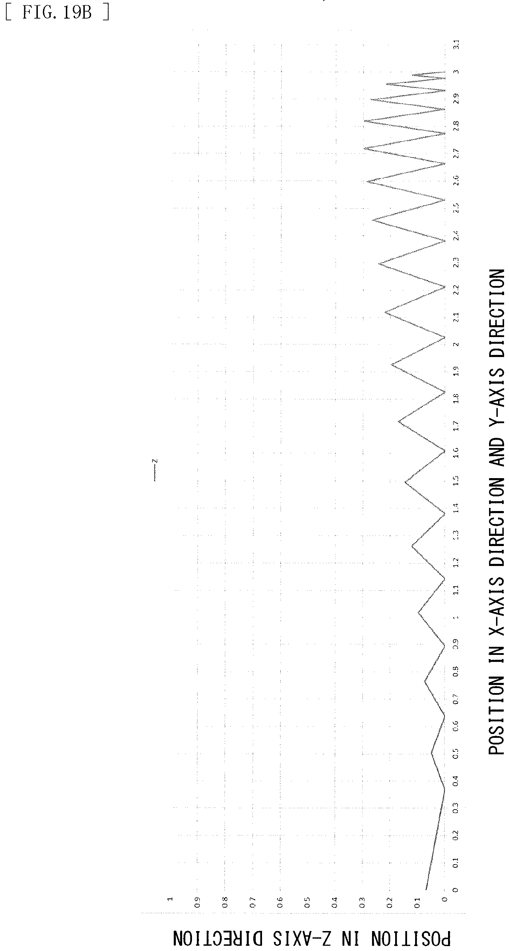

Further, the optical sheet of the present disclosure may have a projection-depression shape in which inward inclined surfaces and outward inclined surfaces are alternately disposed, for example, as in an optical sheet 3D according to a fourth modification example illustrated in FIGs. 19A and 19B. FIG. 19A illustrates a shape along the XY plane, and FIG. 19B illustrates a cross-sectional shape along the Z-axis.

Moreover, the above embodiments, etc. have been described referring to a case where light distribution is adjusted in both the X-direction and the Y-direction; however, the present disclosure is not limited to this. For example, in a case where the light distribution is performed only in the X-direction and the light distribution does not need to be performed in the Y-direction, the inclined surface may have an angle that is constant in the Y-direction.

It is to be noted that the effects described in the present specification are mere examples and description thereof is non-limiting. Other effects may be also provided.

The present application is based on and claims priority from Japanese Patent Application No. 2017-88598 filed with the Japan Patent Office on April 27, 2017.

It should be understood by those skilled in the art that various modifications, combinations, sub-combinations, and alterations may occur depending on design requirements and other factors insofar as they are within the scope of the appended claims or the equivalents thereof.

### Claims

1. A display unit comprising an optical member (3) extending along a first plane and having a thickness in a first direction perpendicular to the first plane, and a light-emitting device (1),
   the optical member (3) comprising n-number of inclined surfaces (S), the n-number of inclined surfaces (S) including first to n-th inclined surfaces (S), the first to n-th inclined surfaces (S) being positioned in respective regions other than regions overlapping each other in the first direction, the first to n-th inclined surfaces (S) each being inclined at an angle $A_m$ with respect to the first plane and allowing entering light to pass therethrough, the angle $A_m$ being smaller than 90 degrees, wherein
   the following conditional expression (1) and the following conditional expression (2) are satisfied,

$$ WA \geq A_m - A_{m-1} \qquad \ldots\ldots (1) $$

$$ A_n > A_{n-1} \cdots > A_m > A_{m-1} > \cdots A_2 > A_1 \quad \ldots\ldots (2) $$

   where "WA" is an angle corresponding to a value equal to or smaller than a half-width of a light distribution of the entering light, "$A_m$" is an angle of an m-th inclined surface with respect to the first plane, "$A_{m-1}$" is an angle of an (m-1)-th inclined surface with respect to the first plane, "n" is a natural number that is equal to or greater than 2, and "m" is any natural number that is equal to or smaller than "n",
   wherein all of the n-number of inclined surfaces (S) are contiguous and the n-number of inclined surfaces (S) comprise respective side surfaces of n-number of cones (C), the n-number of cones (C) each having a height in the first direction.

2. The display unit according to claim 1, wherein the m-th inclined surface (S) and the (m-1)-th inclined surface (S) are contiguous with each other.

3. The display unit according to any one of the previous claims, wherein a difference between the angle $A_m$ and the angle $A_{m-1}$ is defined to cause a difference between an angle $\theta_m$ and an angle $\theta_{m-1}$ to be substantially constant, where $\theta_m$ is an exit angle of exiting light that passes through the m-th inclined surface (S) and exits from the m-th inclined surface (S), and $\theta_{m-1}$ is an exit angle of exiting light that passes through the (m-1)-th inclined surface (S) and exits from the (m-1)-th inclined surface (S).

4. The display unit according to any one of the previous claims, wherein the n-number of inclined surfaces (S) comprise respective side surfaces of n-number of truncated cones (C), the n-number of truncated cones (C) each having a height in the first direction.

5. The display unit according to any one of the previous claims, wherein the n-number of inclined surfaces (S) are contiguous with each other to provide a single depression (D) directed to entering side as a whole.

6. The display unit according to claim 5, wherein the depressions (D) are periodically arranged along the first plane.

7. The display unit according to any one of the previous claim, wherein
the n-number of cones (C) are disposed along the first plane to provide a single cone group (GC), and
the two or more cone groups (GC) are periodically arranged in the first plane.

8. The display unit according to any one of the previous claims, wherein an area of a projection of the n-number of inclined surfaces (S) onto the first plane decreases as the angle $A_m$ increases.

9. The display unit according to any one of the previous claims, wherein an angle corresponding to a value of the half-width of the light distribution of the entering light is equal to or smaller than 30 degrees.

**Patentansprüche**

1. Anzeigeeinheit, umfassend ein optisches Element (3), das sich entlang einer ersten Ebene erstreckt und eine Dicke in einer ersten Richtung senkrecht zu der ersten Ebene aufweist, und eine lichtemittierenden Vorrichtung (1), wobei das optische Element (3) n-Nummer von geneigten Oberflächen (S) umfasst, wobei die n-Nummer von geneigten Oberflächen (S) erste bis n-te geneigte Oberflächen (S) beinhalten, wobei die ersten bis n-ten geneigten Oberflächen (S) in jeweiligen Bereichen positioniert sind, die von Bereichen verschieden sind, die einander in der ersten Richtung überlappen, wobei die ersten bis n-ten geneigten Oberflächen (S) jeweils unter einem Winkel $A_m$ in Bezug auf die erste Ebene geneigt sind und eintretendes Licht durch sie hindurchtreten lässt, wobei der Winkel $A_m$ kleiner als 90 Grad ist, wobei der folgende bedingte Ausdruck (1) und der folgende bedingte Ausdruck (2) erfüllt sind,

$$ WA \geq A_m - A_{m-1} \quad \ldots \ldots \quad (1) $$

$$ A_n > A_{n-1} \cdots > A_m > A_{m-1} > \cdots A_2 > A_1 \quad \ldots \ldots (2) $$

wobei "WA" ein Winkel ist, der einem Wert entspricht, der gleich oder kleiner als eine halbe Breite einer Lichtverteilung des eintretenden Lichts ist, "$A_m$" ein Winkel einer m-ten geneigten Oberfläche in Bezug auf die erste Ebene ist, "$A_{m-1}$" ein Winkel einer (m-1)-ten geneigten Oberfläche in Bezug auf die erste Ebene ist, "n" eine natürliche Zahl ist, die gleich oder größer als 2 ist, und "m" eine beliebige natürliche Zahl ist, die gleich oder kleiner als "n" ist, wobei alle der n-Nummer von geneigten Oberflächen (S) zusammenhängend sind und die n-Nummer von geneigten Oberflächen (S) jeweilige Seitenoberflächen von n-Nummer von Kegeln (C) umfassen, wobei die n-Nummer von Kegeln (C) jeweils eine Höhe in der ersten Richtung aufweist.

2. Anzeigeeinheit nach Anspruch 1, wobei die m-te geneigten Oberfläche (S) und die (m-1)-te geneigte Oberfläche (S) aneinander angrenzen.

3. Anzeigeeinheit nach einem der vorhergehenden Ansprüche, wobei eine Differenz zwischen dem Winkel $A_m$ und

dem Winkel $A_{m-1}$ so definiert ist, dass eine Differenz zwischen einem Winkel $\theta_m$ und einem Winkel $\theta_{m-1}$ im Wesentlichen konstant ist, wobei $\theta_m$ ein Austrittswinkel von austretendem Licht ist, das durch die m-te geneigte Oberfläche (S) hindurchtritt und aus der m-ten geneigten Oberfläche (S) austritt, und $\theta_{m-1}$ ein Austrittswinkel von austretendem Licht ist, das durch die (m-1)-te geneigte Oberfläche (S) hindurchtritt und aus der (m-1)-ten geneigten Oberfläche (S) austritt.

4. Anzeigeeinheit nach einem der vorhergehenden Ansprüche, wobei die n-Nummer von geneigten Oberflächen (S) jeweilige Seitenoberflächen von n-Nummer von Kegelstümpfen (C) umfassen, wobei die n-Nummer von Kegelstümpfen (C) jeweils eine Höhe in der ersten Richtung aufweisen.

5. Anzeigeeinheit nach einem der vorhergehenden Ansprüche, wobei die n-Nummer der geneigten Flächen (S) aneinander angrenzen, um eine einzige Vertiefung (D) bereitzustellen, die auf die Eintrittsseite als Ganzes gerichtet ist.

6. Anzeigeeinheit nach Anspruch 5, wobei die Vertiefungen (D) periodisch entlang der ersten Ebene angeordnet sind.

7. Anzeigeeinheit nach einem der vorhergehenden Ansprüche, wobei
die n-Nummer von Kegeln (C) entlang der ersten Ebene angeordnet sind, um eine einzelne Kegelgruppe (GC) bereitzustellen, und
die zwei oder mehr Kegelgruppen (GC) periodisch in der ersten Ebene angeordnet sind.

8. Anzeigeeinheit nach einem der vorhergehenden Ansprüche, wobei eine Fläche einer Projektion der n-Nummer von geneigten Oberflächen (S) auf die erste Ebene abnimmt, wenn der Winkel $A_m$ zunimmt.

9. Anzeigeeinheit nach einem der vorhergehenden Ansprüche, wobei ein Winkel, der einem Wert der Halbwertsbreite der Lichtverteilung des eintretenden Lichts entspricht, gleich oder kleiner als 30 Grad ist.

**Revendications**

1. Unité d'affichage comprenant un élément optique (3) s'étendant le long d'un premier plan et ayant une épaisseur dans une première direction perpendiculaire au premier plan, et un dispositif émetteur de lumière (1), l'élément optique (3) comprenant un nombre n de surfaces inclinées (S), les n surfaces inclinées (S) comprenant des première à n-ième surfaces inclinées (S), les première à n-ième surfaces inclinées (S) étant positionnées dans des régions respectives autres que des régions se chevauchant les unes les autres dans la première direction, les première à n-ième surfaces inclinées (S) étant chacune inclinées selon un angle $A_m$ par rapport au premier plan et permettant à la lumière incidente de passer à travers, l'angle $A_m$ étant inférieur à 90 degrés,
l'expression conditionnelle suivante (1) et l'expression conditionnelle suivante (2) étant satisfaites,

$$WA \geq A_m - A_{m-1} \quad ...... \quad (1)$$

$$A_n > A_{n-1}... > A_m > A_{m-1} >... \quad A_2 > A_1 \quad ......(2)$$

"WA" étant un angle correspondant à une valeur égale ou inférieure à la demi-largeur d'une distribution de la lumière incidente, "$A_m$" étant un angle d'une m-ième surface inclinée par rapport au premier plan, "$A_{m-1}$" étant un angle d'une (m-1)-ième surface inclinée par rapport au premier plan, "n" étant un nombre naturel qui est égal ou supérieur à 2, et "m" étant n'importe quel nombre naturel qui est égal ou inférieur à "n",
toutes les n surfaces inclinées (S) étant contiguës et les n surfaces inclinées (S) comprenant des surfaces latérales respectives de n cônes (C), les n cônes (C) ayant chacun une hauteur dans la première direction.

2. Unité d'affichage selon la revendication 1, la m-ième surface inclinée (S) et la (m-1)-ième surface inclinée (S) étant contiguës l'une à l'autre.

3. Unité d'affichage selon l'une quelconque des revendications précédentes, une différence entre l'angle $A_m$ et l'angle $A_{m-1}$ étant définie de manière qu'une différence entre un angle $\theta_m$ et un angle $\theta_{m-1}$ soit sensiblement constante, $\theta_m$ étant un angle de sortie de la lumière sortante qui passe à travers la m-ième surface inclinée (S) et sort de la m-ième surface inclinée (S), et $\theta_{m-1}$ étant un angle de sortie de la lumière sortante qui passe à travers la (m-1)-ième surface inclinée (S) et sort de la (m-1)-ième surface inclinée (S).

4. Unité d'affichage selon l'une quelconque des revendications précédentes, les n surfaces inclinées (S) comprenant des surfaces latérales respectives de n cônes tronqués (C), les n cônes tronqués (C) ayant chacun une hauteur dans la première direction.

5. Unité d'affichage selon l'une quelconque des revendications précédentes, les n surfaces inclinées (S) étant contiguës les unes aux autres pour fournir une seule dépression (D) dirigée vers le côté d'entrée dans son ensemble.

6. Unité d'affichage selon la revendication 5, les dépressions (D) étant périodiquement agencées le long du premier plan.

7. Unité d'affichage selon l'une quelconque des revendications précédentes,
les n cônes (C) étant agencés le long du premier plan pour fournir un seul groupe de cônes (GC), et
les deux ou plus de deux groupes de cônes (GC) étant périodiquement agencés dans le premier plan.

8. Unité d'affichage selon l'une quelconque des revendications précédentes, une zone d'une projection des n surfaces inclinées (S) sur le premier plan diminuant à mesure que l'angle $A_m$ augmente.

9. Unité d'affichage selon l'une quelconque des revendications précédentes, un angle correspondant à une valeur de la demi-largeur de la distribution lumineuse de la lumière incidente étant égal ou inférieur à 30 degrés.

[ FIG. 1 ]

[ FIG. 2 ]

[ FIG. 3 ]

[ FIG.4 ]

[ FIG. 5 ]

[ FIG. 6 ]

[ FIG. 7 ]

[ FIG. 8 ]

[ FIG. 9 ]

[ FIG. 10 ]

[ FIG. 11 ]

[ FIG. 12 ]

[ FIG. 13 ]

[ FIG. 14A ]

210

220

[ FIG. 14B ]

210

220

[ FIG. 15 ]

843

842

841

[ FIG. 16 ]

843

842

841

[ FIG. 17 ]

EP 3 617 755 B1

[ FIG. 18 ]

844

850A

850B

850B

[ FIG. 19A ]

[ FIG. 19B ]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005254259 A1

- JP 2017088598 A

### Non-patent literature cited in the description

- *LIGHT SHAPING DIFFUSER OVERVIEW,* 21 April 2017, http://www.luminitco.com/products/light-shaping-diffusers